# EUROPÄISCHE PATENTSCHRIFT

(11) **EP 1 383 991 B1**
(45) Veröffentlichungstag und Bekanntmachung des Hinweises auf die Patenterteilung: **30.11.2005**
(21) Anmeldenummer: 02769121.1
(22) Anmeldetag: 03.04.2002
(51) Int. Cl.: F01N 3/20

(54) **FAHRZEUG MIT VERBRENNUNGSMOTOR, BRENNSTOFFZELLE UND KATALYSATOR**
VEHICLE WITH INTERNAL COMBUSTION ENGINE, FUEL CELL AND CATALYST
VEHICULE COMPRENANT UN MOTEUR A COMBUSTION INTERNE, UNE PILE A COMBUSTIBLE ET UN POT CATALYTIQUE

(30) Priorität: 04.05.2001 DE 10121665
(43) Veröffentlichungstag der Anmeldung: 28.01.2004
(73) Patentinhaber: Bayerische Motoren Werke Aktiengesellschaft, 80809 München (DE)
(72) Erfinder: WETZEL, Franz-Josef, 82216 Gernlinden (DE); TACHTLER, Joachim, 85737 Ismaning (DE)
(86) Internationale Anmeldenummer: PCT/EP2002/003707
(87) Internationale Veröffentlichungsnummer: WO 2002/090733

(56) Entgegenhaltungen:
- EP-A- 0 620 894
- EP-A- 0 943 787
- EP-A- 1 030 395
- EP-A- 1 057 998
- EP-A- 1 209 331

## Beschreibung

Die Erfindung betrifft ein Fahrzeug mit einem Verbrennungsmotor, einer Brennstoffzelle und einem Katalysator gemäß dem Oberbegriff des Anspruchs 1.

Bei Fahrzeugen mit einem Verbrennungsmotor, die zur Abgasnachbehandlung einen Katalysator besitzen, ist es bekannt, dass gerade die Kaltstartphase problematisch ist. In diesem Betriebszustand befindet sich der Katalysator noch nicht auf seiner Betriebstemperatur, so dass er noch nicht im erforderlichen Umfang wirksam ist. Aus diesem Grunde sind eine Reihe von Maßnahmen bekannt, den Katalysator bei Kaltstartbedingungen möglichst schnell auf seine Betriebstemperatur zu bringen. Als eine Maßnahme ist es bekannt, den Katalysator elektrisch aufzuheizen. Ferner ist auch eine Heizung mittels Verbrennen eines Brennkraftstoffes bekannt, bei der das normalerweise für den Verbrennungsmotor vorgesehene Brennstoffmittel in einem speziellen Brenner für den Katalysator verwendet wird. Überdies ist es bekannt, den Verbrennungsmotor beim Kaltstart in einer besonderen Betriebsbedingung zu betrieben, so dass beispielsweise besonders hohe Abgastemperaturen oder wenige Schadstoffemissionen anfallen.

Aus der EP 1 057 998 A1 ist ein Verfahren zur Erzeugung eines Hilfsbrennstoffes aus dem Betriebskraftstoff einer gemischverdichtenden Brennkraftmaschine bekannt, wobei dieser Hilfskraftstoff bspw. zur Versorgung einer Brennstoffzelle verwendet werden kann, aber auch zum Aufheizen eines in der Abgasanlage der Brennkraftmaschine angeordneten Katalysators auf Anspringtemperatur verwendet werden kann.
In der nicht vorveröffentlichten EP 1 209 331 A2 ist ein Nachbrenner in Verbindung mit einem katalytischen Reaktor beschrieben, der bspw. bei einer Brennstoffzellenanlage mit einem Gaserzeugungssystem zur Erzeugung eines wasserstoffhaltigen Gases eingesetzt werden kann, wobei in einer Ausführungsform auch Brennstoffzellen-Abgas dem katalytischen Reaktor zur Wärmeabgabe zugeführt wird. In dieser Schrift findet sich außerdem der Hinweis, dass Abgas einer Brennkraftmaschine durch den katalytischen Reaktor geführt werden kann und dass ein Einsatz in einem Kraftfahrzeug erfolgen kann.

Aufgabe der vorliegenden Erfindung ist es, für ein Fahrzeug nach dem Oberbegriff eine Maßnahme zur schnellen Aufheizung des Katalysators, insbesondere im Kaltstartbereich desselben, anzugeben, die insbesondere auch funktional sinnvoll ist.
Diese Aufgabe wird durch die im Anspruch 1 genannten Merkmale gelöst.

Demgemäss besteht ein wesentlicher Gedanke der vorliegenden Erfindung darin, bei einem Fahrzeug mit einem Verbrennungsmotor, einem Katalysator und einer Brennstoffzelle zumindest einen Teil der in der Brennstoffzelle entstehende Abwärme mittels einer Wärmekopplung zwischen Brennstoffzelle und Katalysator dem Katalysator zuzuführen. Insbesondere werden dabei die in den Abgasen enthaltenen Wärmemengen dem Katalysator zur Verfügung gestellt.

Dies kann gemäß einer Ausführungsform dadurch geschehen, dass die heißen Abgase der Brennstoffzelle bei Bedarf durch den Katalysator geleitet werden und diesen erhitzen. Damit diese Maßnahme nur dann durchgeführt wird, wenn sich der Katalysator nicht auf seiner Betriebstemperatur befindet oder wenn die Brennstoffzelle überhaupt Abgase mit einem entsprechenden Wärmeinhalt generiert, ist eine Umschalteinrichtung vorgesehen, mit der eine Umschaltung in der Weise erfolgen kann, dass die Abgase wahlweise durch den Katalysator oder im anderen Fall beispielsweise an die Umgebung geleitet werden. Bei einer besonderen Ausführungsform der vorliegenden Erfindung ist dazu eine Steuervorrichtung vorgesehen, die die Umschalteinrichtung entsprechend steuert.

Ein anderer Ansatz, die in den Abgasen der Brennstoffzelle gespeicherte Wärme zu nutzen besteht darin, einen Wärmetauscher vorzusehen, an den die Abgase der Brennstoffzelle einen Teil ihrer Wärme abgeben, die dann wiederum dem Katalysator zur Verfügung gestellt wird. Eine einfache Form eines solchen Wärmetauschers kann in Form einer Rohrwendel vorgesehen sein, die spiralförmig um den Katalysator angeordnet ist. Werden die Abgase durch die Rohrwendel hindurchgeleitet, so erwärmen sie den Katalysator ebenfalls. Wie auch bei der ersten Alternative kann die Durchleitung des Wärmetauschers mit Abgasen wahlweise, beispielsweise in der Kaltstartphase erfolgen. Ist eine Durchleitung nicht vorgesehen, so werden die Abgase - wie oben bereits erwähnt - direkt an die Umluft abgegeben.

Eine besonders bevorzugte Ausführungsform ist dadurch gegeben, wenn nach der Brennstoffzelle noch ein Nachbrenner nachgeschaltet ist, in dem ein noch reaktionsfähiges Verbrennungsgas, welches in der Brennstoffzelle nicht umgesetzt wurde, enthalten ist. Im Nachbrenner werden diese Gase dann unter entsprechender Wärmeabgabe verbrannt und können dann in gleicher Weise wie oben dargestellt dem Katalysator direkt oder über einen Wärmetauscher zur Verfügung gestellt werden. Mittels des Nachbrenners erreicht man dabei Temperaturen von bis zu 1.100°. Der Nachbrenner kann sowohl an den Kühlwasserkreislauf des Verbrennungsmotors angeschlossen werden und diesen ebenfalls auf Temperatur bringen, wie auch die Wärme für den Katalysator generieren.

Von besonderem Vorteil ist das vorgestellte System, wenn die Brennstoffzelle bereits vor dem Start des Verbrennungsmotors betrieben wird, in diesem Fall kann der Katalysator relativ kurzfristig zumindest in die Nähe der Betriebstemperatur gebracht werden, so dass die Nachteile eines normalen Kaltstarts vermieden werden können.

Insgesamt können mit der vorliegenden Erfindung die Katalysatoren im Abgassystem eines Verbrennungsmotors durch Einkoppeln der verbleibenden Abgaswärme einer Brennstoffzelle oder eines nachgeschalteten Nachbrenners entweder mittels direkter Durchströmung oder via Wärmetauscher thermisch auf ihre Arbeitstemperatur gebracht werden. Eine elektrische Katalysatorheizung kann damit entfallen.

Nachfolgend wird die vorliegende Erfindung mit Bezug auf die beiliegenden Zeichnungen näher erläutert. Die Zeichnungen zeigen in
- Fig. 1: eine schematische Konstruktionsanordnung einer ersten Ausführungsform der erfindungsgemäßen Anordnung und
- Fig. 2: eine schematische Konstruktionsdarstellung wie Fig. 1, jedoch gemäß einer zweiten Ausführungsform.

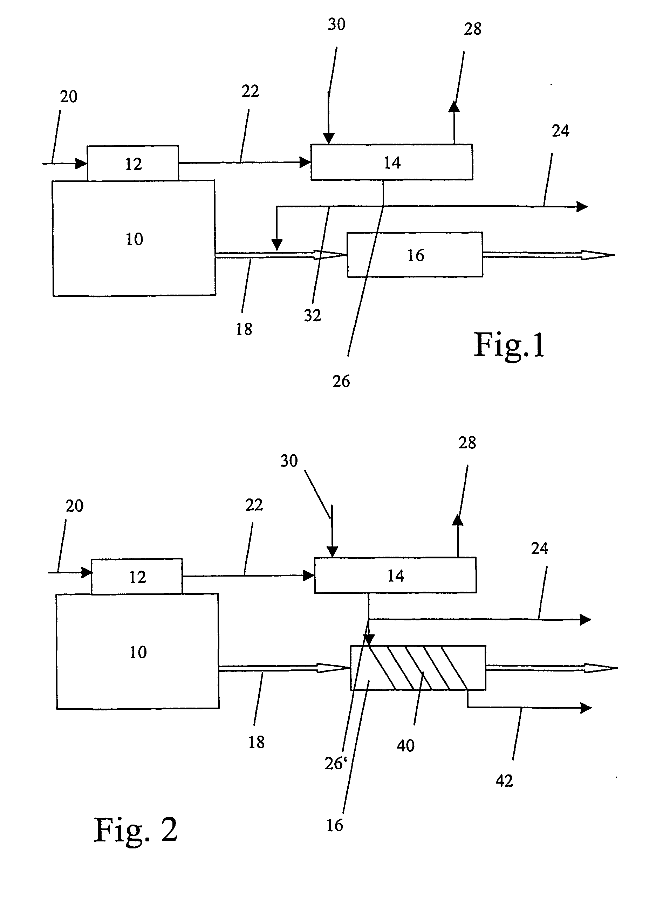

Bei der vorliegenden Ausführungsform der Erfindung ist in den Fig. 1 und 2 schematisch ein System mit einem Verbrennungsmotor 10, einer Brennstoffzelle 12 und einem Katalysator 16 dargestellt. Der Verbrennungsmotor 10 ist über eine Abgasleitung 18 mit dem Katalysator 16 verbunden, der wiederum über eine Abgasleitung die abgasnachbehandelten Emissionen an die Umgebung abführt.

Mit dem Verbrennungsmotor 10 ist eine Brennstoffzelle 12 wärmetechnisch gekoppelt und konstruktiv am Motorblock befestigt. Die Brennstoffzelle erhält über eine Zuführung 20 (nur schematisch dargestellt) die für die elektrochemische Reaktion notwendigen Reaktanden, die je nach Energieanforderung in der Brennstoffzelle 12 umgesetzt werden. Über eine Abgasleitung 22 werden die Abgase der Brennstoffzelle einem Nachbrenner 14 zugeführt. Die Abgase der Brennstoffzelle enthalten zum einen verbrauchte Reaktanden, zum anderen aber noch nicht miteinander reagierte Reaktanden, die einer vorliegenden Leistungsanforderung an die Brennstoffzelle nicht in elektrische Energie umgesetzt wurden. Diese noch reaktionsfähigen Reaktanden werden im Nachbrenner 14 verbrannt, wodurch eine Wärmeentwicklung im Bereich bis zu 1.100°C erzeugt werden kann. Der Nachbrenner ist konstruktiv mit dem Kühlwasserkreislauf des Verbrennungsmotors gekoppelt, was in Fig. 1 durch die Pfeile 28 und 30 dargestellt worden ist, welche einen Kühlwassereintritt 30 und einen Kühlwasseraustritt 28 aus dem Nachbrenner symbolisieren soll.

Überdies werden aus dem Nachbrenner 14 die dort entstandenen Abgase abgeführt. An einer mit der Bezugsziffer 26 bezeichneten Verzweigung, die mit einem vorliegend nicht näher dargestellten Umschaltventil versehen ist, können die heißen Abgase des Nachbrenners 14 in zwei verschiedene Rohrleitungen geschaltet werden. Zum einen können die Abgase in eine Rohrleitung 24 eingeleitet werden, die die Abgase an die Umgebung leitet. Überdies können die Abgase aber auch in die Rohrleitung 18 eingeführt werden und zwar stromaufwärts des Katalysators 16, so dass sie diesem durchströmen und dabei erhitzen.

Bei der alternativen Ausführungsform gemäß Fig. 2 bezeichnen gleiche Bezugsziffern gleiche Teile der Erfindung. Die alternative Ausführungsform in Fig. 2 unterscheidet sich von derjenigen in Fig. 1 lediglich dadurch, dass die heißen Abgase aus dem Nachbrenner 14 nicht direkt durch den Katalysator 16 eingeleitet werden. Vielmehr ist eine Spiralwendel 40 um den Katalysator gelegt, durch welche die Abgase über ein Umschaltventil 26' (wiederum nicht genauer dargestellt) alternativ hindurchgeleitet werden können. Am Ende der Abgasspirale 40 werden die Abgase aus dem Nachbrenner 14 dann wieder an die Umgebung abgegeben.

Natürlich können heiße Abgase aus der Brennstoffzelle 12 auch unmittelbar in den in den Fig. 1 und 2 dargestellten Weisen durch den Katalysator geführt oder außen am Katalysator entlanggeführt werden. Allerdings reduzieren sich dann die Abgastemperaturen von etwa 1.100 °C auf unter 800 °C.

Die vorliegende Erfindung stellt auf einfache und konstruktiv günstige Weise sicher, dass bei einem aus Verbrennungsmotor, Abgaskatalysator und Brennstoffzelle - eventuell mit Nachbrenner - bestehenden System eine Wärmekopplung zwischen Brennstoffzelle/Nachbrenner und Katalysator hergestellt ist, so dass die in dem System aus Brennstoffzelle/Nachbrenner entstehende Wärme zur Aufheizung des Katalysators dienen kann.

## Patentansprüche

1. Fahrzeug umfassend einen Verbrennungsmotor (10), dessen Abgase an einen Katalysator (16) abgegeben werden, und eine Brennstoffzelle (12), die zur Stromerzeugung vorgesehen ist und die heiße Abgase emittiert, wobei eine Wärmekopplung zwischen Brennstoffzelle (12) und Katalysator (16) derart vorgesehen ist, dass die von der Brennstoffzelle (12) über deren Abgase abgeführte Wärme zumindest zum Teil an den Katalysator (16) leitbar ist,
**dadurch gekennzeichnet, dass** eine Umschalteinrichtung (26, 26') in der Abgasleitung (24, 32) der Brennstoffzelle (12) vorgesehen ist, mit der entweder die über die Abgase der Brennstoffzelle (12) abgeführte Wärme an den Katalysator (16) leitbar ist oder die Abgase der Brennstoffzelle (12) unter Umgehung des Katalysators (16) in die Umgebung geführt werden.

2. Fahrzeug nach Anspruch 1,
**dadurch gekennzeichnet, dass** die Abgasleitung (32) der Brennstoffzelle (12) derart ausgebildet und mit dem Katalysator (16) verbunden ist, dass das heiße Abgas aus der Brennstoffzelle (12) durch den Katalysator (16) leitbar ist.

3. Fahrzeug nach Anspruch 1,
**dadurch gekennzeichnet, dass** ein Wärmetauscher (40) vorgesehen ist, an den die Abgas der Brennstoffzelle (12) einen Teil ihrer Wärme abgeben die dann dem Katalysator (16) zur Verfügung gestellt ist.

4. Fahrzeug nach Anspruch 3,
**dadurch gekennzeichnet, dass** der Wärmetauscher (40) eine Rohrwendel aufweist, die spiralförmig um den Katalysator (16) angeordnet ist.

5. Fahrzeug nach einem der vorhergehenden Ansprüche,
**dadurch gekennzeichnet, dass** ein Nachbrenner (14) vorgesehen ist, in dem die nicht reagierten Reaktanden aus der Brennstoffzelle (12) verbrannt werden und der zwischen Brennstoffzelle (12) einerseits und Katalysator (16) oder Wärmetauscher (40) andererseits zwischengeschaltet ist.

## Claims

1. A vehicle comprising an internal-combustion engine (10), the exhaust gases of which are released to a catalyst (16), and a fuel cell (12), which is provided to generate power and which emits hot exhaust gases, wherein a coupling of heat is provided between the fuel cell (12) and catalyst (16) in such a way that the heat discharged from the fuel cell (12) via its exhaust gases can be guided, at least partially, to the catalyst (16), **characterised in that** a switching device (26, 26') is provided in the exhaust gas line (24, 32) of the fuel cell (12), with which either the heat discharged via the exhaust gases of the fuel cell (12) can be guided to the catalyst (16) or the exhaust gases of the fuel cell (12) are guided into the environment, bypassing the catalyst (16).

2. A vehicle according to claim 1, **characterised in that** the exhaust gas line (32) of the fuel cell (12) is configured and connected to the catalyst (16) in such a way that the hot exhaust gas from the fuel cell (12) can be guided through the catalyst (16).

3. A vehicle according to claim 1, **characterised in that** a heat exchanger (40) is provided, to which the exhaust gas of the fuel cell (12) releases a portion of its heat, which is then made available to the catalyst (16).

4. A vehicle according to claim 3, **characterised in that** the heat exchanger (40) has a spiral tube, which is arranged spirally around the catalyst (16).

5. A vehicle according to any one of the preceding claims, **characterised in that** an after-burner (14) is provided, in which the reactants from the fuel cell (12) that have not reacted are combusted and which is interposed between the fuel cell (12), on the one hand, and catalyst (16) or heat exchanger (40), on the other hand.

## Revendications

1. Véhicule comprenant un moteur à combustion interne (10) dont les gaz d'échappement sont transmis vers un catalyseur (16), et une pile à combustible (12) prévue pour produire de l'électricité et qui émet des gaz d'échappement chauds, un accouplement thermique étant prévu entre la pile à combustible (12) et le catalyseur (16) de telle sorte que la chaleur amenée par la pile à combustible (12) par l'intermédiaire de ses gaz d'échappement peut être dirigée au moins en partie vers le catalyseur,
**caractérisé en ce qu'**
un système de commutation (26, 26') est prévu dans la conduite d'échappement (24, 32) de la pile à combustible (12) pour pouvoir soit diriger la chaleur amenée par l'intermédiaire des gaz d'échappement de la pile à combustible (12) vers le catalyseur (16), soit guider dans l'environnement les gaz d'échappement de la pile à combustible (12) en contournant le catalyseur (16).

2. Véhicule selon la revendication 1,
**caractérisé en ce que**
la conduite d'échappement (32) de la pile à combustible (12) est reliée au catalyseur (16) et réalisée de telle sorte que les gaz d'échappement chauds provenant de la pile à combustible (12) peuvent être dirigés vers le catalyseur (16).

3. Véhicule selon la revendication 1,
**caractérisé en ce qu'**
un échangeur thermique (40) est prévu pour que les gaz d'échappement de la pile à combustible (12) transmettent une partie de leur chaleur qui est alors mise à la disposition du catalyseur (16).

4. Véhicule selon la revendication 3,
**caractérisé en ce que**
l'échangeur thermique (40) présente une bobine tubulaire en forme de spirale qui est disposée autour du catalyseur (16).

5. Véhicule selon l'une des revendications précédentes,
**caractérisé en ce qu'**
un brûleur de post-combustion (14) prévu pour brûler les réactants provenant de la pile à combustible (12) et qui n'ont pas réagi, est interposé entre la pile à combustible (12) d'une part, et le catalyseur (16) ou l'échangeur thermique (40) d'autre part.
